# EUROPEAN PATENT APPLICATION

(11) **EP 4 674 796 A1**
(43) Date of publication of application: **07.01.2026**
(21) Application number: 25186710.7
(22) Date of filing: 01.07.2025
(51) Int. Cl.: B65H 31/02, B65H 29/24, A47B 87/00, B25J 19/00, B25J 19/06, B25J 21/00, E04B 1/343, E04B 2/74, F16P 1/00

(54) **A PERIMETRAL DELIMITATION MODULE FOR A COLLECTION SYSTEM OF A SEPARATING ELEMENT ARRANGED BETWEEN TWO GROUPS OF BLANKS AND CORRESPONDING COLLECTION SYSTEM**

(30) Priority: 04.07.2024 IT 202400015424
(71) Applicant: G.D S.p.A., 40133 Bologna (IT)
(72) Inventor: SECCHI, Matteo, 40133 BOLOGNA (IT); GAUDENZI, Fabio, 40133 BOLOGNA (IT)
(74) Representative: Studio Torta S.p.A.

(57) **Abstract**

A perimetral delimitation module (9) for a work area (7) of a gripping apparatus (4) configured for removing a flat separating element (2), which is arranged between two groups (3) of blanks overlapping one another, and which is configured to collect within it the at least one separating element (2); the perimetral delimitation module (9) comprises: a pair of vertical panels (10, 11) that are parallel and opposed to each other; the panels (10, 11) are spaced apart with a first distance (D1), so as to define between them a collection cavity (12) that is configured to accommodate the at least one separating element inserted by the gripping apparatus (4). The first panel (10) faces the work area (7) and is provided with an introduction opening (13); and the second panel (11) is arranged on the opposite side of the first panel (10) that is opposite to the work area (7); and the second panel (11) is provided with an extraction opening (14) through which the collection cavity (12) is accessible to take at least one separating element from the collection cavity (12).

## Description

### CROSS-REFERENCE TO RELATED APPLICATIONS

This patent application claims priority from Italian patent application no. 102024000015424 filed on July 4, 2024, the entire disclosure of which is incorporated herein by reference.

### TECHNICAL FIELD

This invention relates to a perimetral delimitation module for a collection system of a separating element arranged between two groups of blanks, in particular of the tobacco industry, as well as to the collection system provided with this delimitation module.

The invention finds advantageous, but not exclusive, application in grasping a group of stacked blanks and a separating element arranged between the two overlapping groups of blanks.

### PRIOR ART

In packaging machines, the flat blanks are typically fed by taking them from a feeding support (such as a pallet). Typically, each feeding support comprises a plurality of stacked groups of blanks (each group also known as a *"bundle*"). The groups of blanks are arranged next to each other on the feeding support plane. Each group of blanks instead comprises multiple blanks stacked on top of each other. Generally, several layers of groups are arranged on the feeding support and each layer of groups overlaps the one below. Between two overlapping layers there is typically a flat separating element (also known as an *"interlayer"*)*.* The separating element typically has the same dimension in plan as the feeding support.

The separating element is typically taken from a gripping apparatus and then placed in a collection container. The container is placed near the gripping apparatus. The gripping apparatus is connected to a handling device (typically a robotic arm), which is configured to move the gripping apparatus itself into the space between the gripping station of the separating element and the collection container.

The area around the handling device is, in particular, completely, delimited along the perimeter by partition walls (barriers).

Therefore, when the container is full and needs to be emptied, the operator must stop the handling device (waiting for it to come to a standstill), enter the work area through a special door, and then, after emptying the container, restart the movement of the handling device.

The known solution therefore has several drawbacks.

Firstly, the removal operation requires the work area to be accessible from the outside and to be of a size and shape that allows access in line with current safety regulations. Therefore, the delimited work area must be large enough to provide an entrance door (typically hinged), which is needed to access the work area. In addition, the work area must also be shaped in such a way that the footprint (that is, the space occupied by the door during its opening) is free of obstacles, to allow it to be opened and moved safely.

Secondly, since it requires the removal of the separating elements, the complete interruption of the operations of the handling device and thus also of the gripping apparatus connected to it, the removal operation is onerous and very time-consuming.

The patent US5997240A describes a device for handling groups of blanks.

Patents US2010057246A1 and EP4116241A1 describe devices for de-palletising products stacked on a support.

Patent EP1157952B1 describes a device for handling stacked reels.

### DESCRIPTION OF THE INVENTION

The purpose of this invention is to provide a perimetral delimitation module for a collection system of a separating element arranged between two groups of blanks that is free of the drawbacks described above and is easy and inexpensive to manufacture.

In accordance with this invention, a perimetral delimitation module is provided as claimed in the appended claims.

In addition, this invention provides a collection system equipped with the perimetral delimitation module, as claimed in the appended claims.

The claims describe preferred embodiments of this invention forming an integral part of the present specification.

### BRIEF DESCRIPTION OF THE DRAWINGS

This invention will now be described with reference to the accompanying drawings, which illustrate non-limiting embodiments thereof, wherein:
- Figure 1 schematically shows a plurality of groups of blanks separated by a respective separating element;
- Figure 2 is a schematic plan view from above of a collection system according to this invention;
- Figure 3 is a schematic, perspective view of a separating module of the system in Figure 2;
- Figure 4 is a schematic, front-front view of the separating module in Figure 3;
- Figure 5 is a schematic, front-rear view of the separating module in Figure 3;
- Figure 6 is a schematic view in vertical cross section, along the lines VI-VI in Figure 5, of the separating module;
- Figure 7 is an enlarged view of a portion in Figure 6;
- Figure 8 is a schematic, perspective view of a possible embodiment of the collection system (with some parts removed for clarity); and
- Figure 9 is a schematic view in vertical cross section of the system in Figure 8 (with some parts removed for the sake of clarity).

### PREFERRED EMBODIMENTS OF THE INVENTION

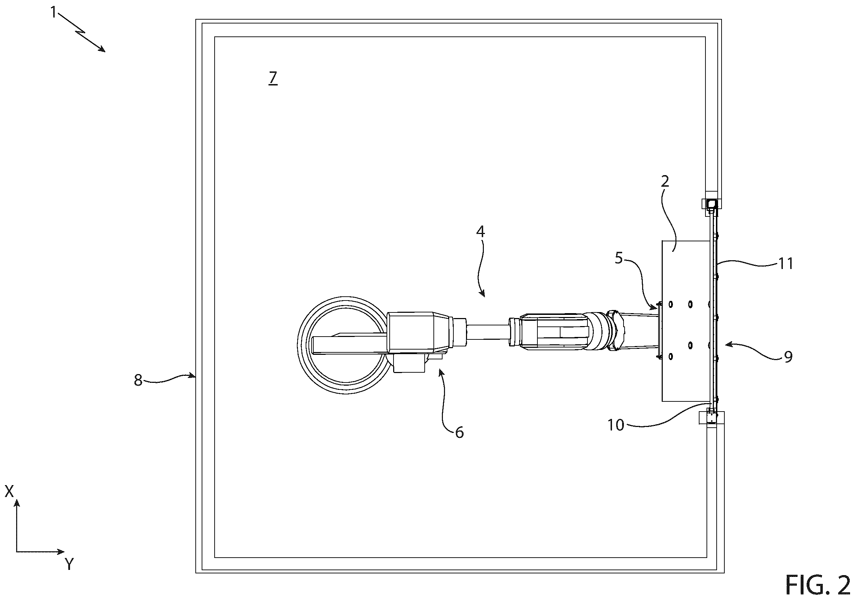

In Figure 2, the reference number 1 denotes, as a whole, a collection system, in particular of the tobacco industry, of a separating element 2 that is arranged (that is, interposed) between two groups 3 of blanks overlapping each other by means of a gripping apparatus 4. Typically, the groups of blanks 3 are supplied near the gripping apparatus 4 on a feeding support (such as a pallet, for example, which is not shown).

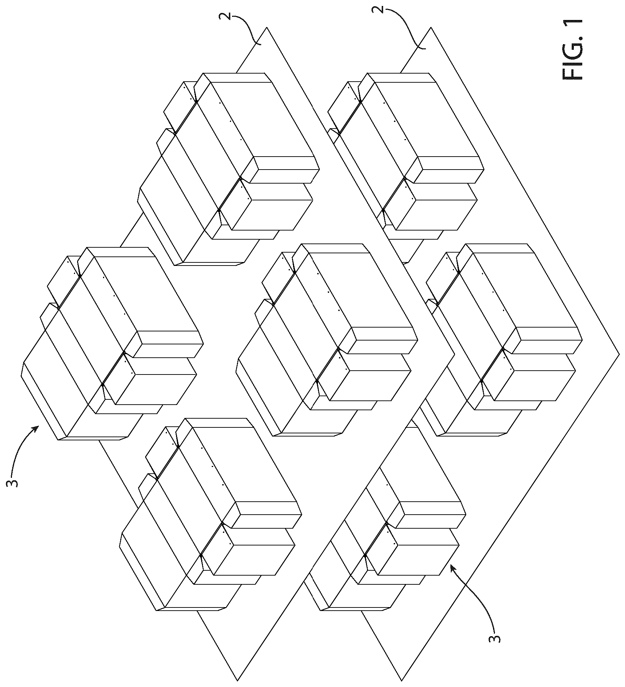

As illustrated in Figure 1, the separating element 2 separates two groups 3 of blanks arranged on two planes one above the other. Each group 3 of blanks comprises, in turn, a plurality of blanks stacked neatly on top of each other. The separating element 2 is a flat element typically made of cardboard. The separating element 2 has a thickness (dimension measured orthogonally to the plan, that is, to the support surface of the separating element 2) that is much smaller than the dimension in plan.

The gripping apparatus 4 comprises a gripping device 5 (also known as a gripping head) and a handling device 6 (such as, for example, a robotic arm), to whose end the gripping device 5 is connected. The handling device 6 is configured to handle (and thus move in space) the gripping device 5. The gripping apparatus 4 is arranged in a work area 7.

Figure 2 illustrates, for illustrative and non-limiting purposes only, a possible work area 7 that is delimited along the perimeter by multiple partition walls 8 and a delimitation module 9, interposed between two partition walls 8 and configured to collect at least one separating element 2 within it. According to a possible, alternative embodiment (not illustrated), there may be more than one delimitation module 9, so as to increase the overall collection volume of the work area 7.

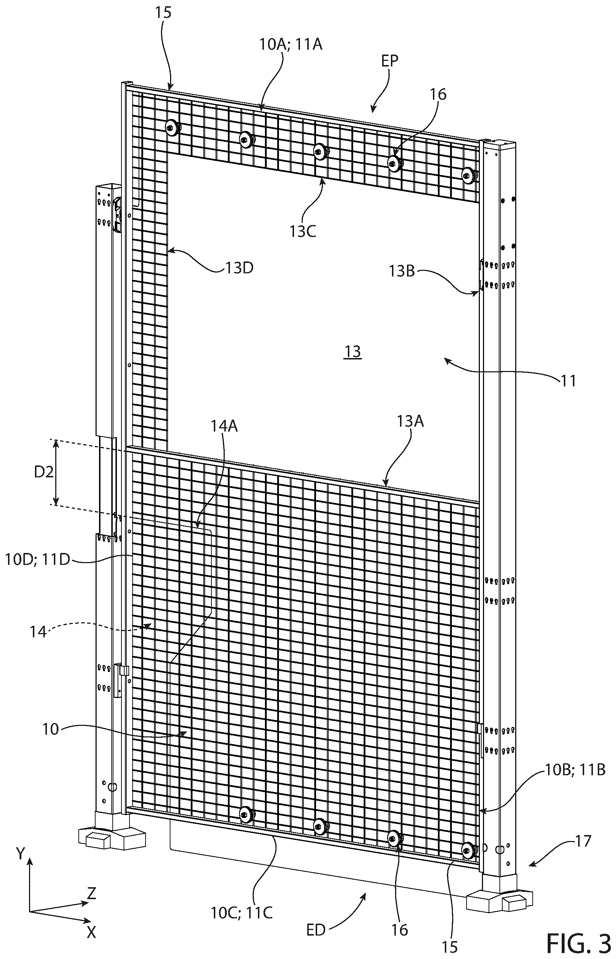

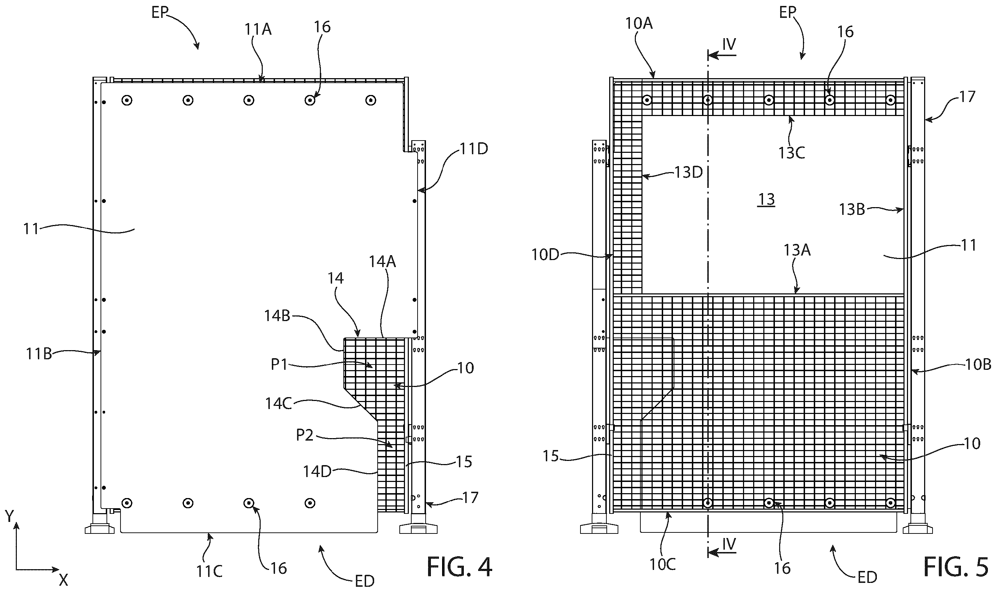

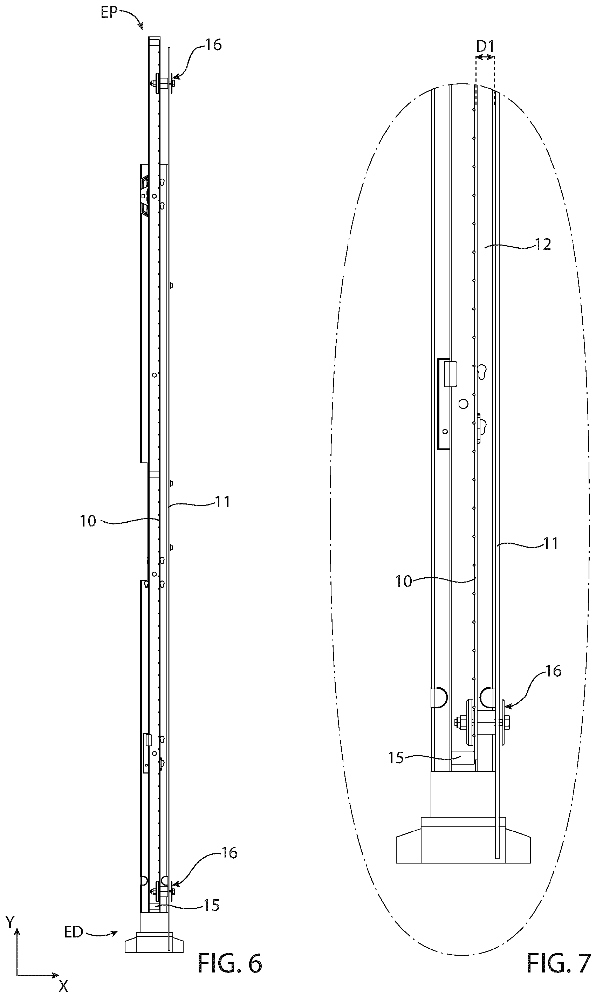

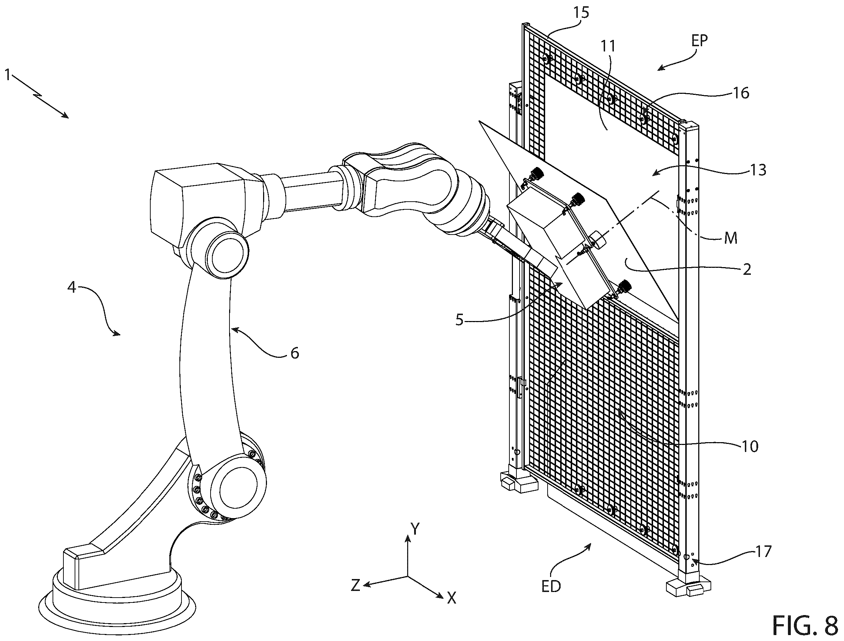

The delimitation module 9 (illustrated in detail in Figures 3-9) comprises a proximal end EP and a distal end ED, which is closer to the support plane of the module 9 than the proximal end EP. The delimitation module 9 comprises a pair of vertical panels 10 and 11 that are parallel and opposite each other. The vertical panels 10 and 11 are spaced apart at a distance D1 (measured orthogonally to the plane X-Y with the greatest dimension of each panel 10 and 11). In particular, the dimension D1 is measured parallel to the direction Z, so as to define between them a collection cavity 12 that is configured to accommodate the at least one separating element 2 inserted by the gripping apparatus 4. The separating elements are arranged essentially parallel (vertically; that is, with the main plane X-Y parallel to the panels 10 and 11). The distances X, Y, Z are orthogonal to each other and have been shown schematically in the figures.

The distance D1 is preferably less than 25 mm, particularly 20 mm.

The vertical panel 10 faces the work area 7 and is equipped with an introduction opening 13. The introduction opening 13 is configured to receive the separating element 2 through it, so that it is arranged in the cavity 12. In other words, the separating element 2 is inserted into the cavity 12 through the introduction opening 13. The panel 10 has a rectangular shape (specifically a parallelepiped with negligible thickness compared to the other two spatial dimensions). The panel 10 has at least four outer perimetral edges 10A-10D. In particular, the outer perimetral edges 10A and 10C are parallel to each other; whereas, the outer perimetral edges 10B and 10D are parallel to each other. The outer perimetral edges 10A and 10C are transverse, in particular orthogonal, to the outer perimetral edges 10B and 10D.

The other vertical panel 11 is arranged on the opposite side of the panel 10 and is opposite the work area 7. The panel 11 has a rectangular shape (specifically a parallelepiped with negligible thickness compared to the other two spatial dimensions). The panel 11 has at least four outer perimetral edges 11A-11D. In particular, the outer perimetral edges 11A and 11C are parallel to each other; whereas, the outer perimetral edges 11B and 11D are parallel to each other. The outer perimetral edges 11A and 11C are transverse, in particular orthogonal, to the outer perimetral edges 11B and 11D. The panel 10 is then interposed between the panel 11 and the work area 7. The panel 11 is provided with an extraction opening 14 through which the collection cavity 12 is accessible (from outside the work area 7) to withdraw at least one separating element 2 from the collection cavity 12.

Advantageously, as illustrated in Figures 3, 5 and 8, the introduction opening 13 and extraction opening 14 are not facing each other. In other words, the introduction opening 13 and the extraction opening 14 are vertically spaced and offset from each other. A lower perimetral edge 13A of the introduction opening 13 is spaced with a distance D2 (measured orthogonally to the direction D1, in particular parallel to the direction Y) from an upper perimetral edge 14A of the extraction opening 14. The distance D2 is at least 120 mm, so as to prevent an operator who inserts their hand into the extraction opening 14 (and thus into the collection cavity 12) from reaching the work area 7.

Advantageously, but without imposing limitations, the introduction opening 13 has a polygonal shape. In particular, in the embodiment illustrated in the attached figures, the introduction opening 13 has a rectangular shape, preferably having a height (dimension measured vertically parallel to the direction Y) of less than 1500 mm, in particular between 100 mm and 900 mm, and a width (dimension measured orthogonally to the height, that is, parallel to the direction X) of less than 1500 mm, in particular between 600 mm and 1400 mm.

In particular, the introduction opening 13 therefore comprises four perimetral edges 13A-13D (shown in Figure 3) that are arranged in pairs transversely (in particular orthogonally) to each other. In the illustrated embodiment, at least one of the perimetral edges 13A-13D (in particular, only the perimetral edge 13B) of the introduction opening 13 coincides with a respective outer perimetral edge 10A-10D (in particular, outer perimetral edge 10B) of the panel 10. Alternatively, each perimetral edge 13A-13D of the introduction opening 13 is spaced from a respective outer perimetral edge 10A-10D of the panel 10.

Advantageously, but without imposing limits, the extraction opening 14 has a polygonal shape and at least two perimetral edges 14A-14F (in particular, the perimetral edges 14E and 14F) of the extraction opening 14 coincide with, or are parallel to, two respective outer perimetral edges 11C and 11D of the panel 11.

In particular, in the embodiment illustrated in the attached figures, the extraction opening 14 comprises (in particular consists of) a trapezoidal portion P1 and a rectangular portion P2; in which the trapezoidal portion P1 protrudes further onto the plane of the panel 11 (in particular parallel to the direction X) than the rectangular portion P1, so as to define an area of facilitated withdrawal.

According to one preferred embodiment, the vertical panel 10 comprises (in particular is made of) a wire mesh, in particular an electrowelded wire mesh. The wire mesh gives the vertical panel 10 mechanical strength. In addition or alternatively, the vertical panel 11 comprises (in particular, is made of) at least one material chosen from (non-exhaustive list): a metal material, such as a steel sheet; or a plastic material (such as a thermosetting resin, in particular, Plexiglas^{®} or a thermoplastic polymer, in particular, polycarbonate). The plastic material gives the panel 11 lightness and, at the same time, mechanical strength. In addition, if the panel 11 is at least partially transparent or translucent in such a way that it is possible to recognise whether there is at least one separating element 2 in the collection cavity 12.

Advantageously, but without imposing limitations, the module 9 comprises a supporting frame 15. The supporting frame 15 is rectangular in shape and can be seen in the attached figures. At least one of the panels 10, 11 is, in particular, rigidly connected to the supporting frame 15.

In the embodiment illustrated in the attached figures, at least one portion of each outer perimetral edge 10A-10D is connected on one side to a respective portion of the supporting frame 15. Whereas, the panel 11 is not connected to the frame 15.

According to a possible, alternative embodiment, in addition to the panel 10, at least a portion of each outer perimetral edge 11A-11D is also connected on one side (which is opposite the side to which the panel 10 is connected) to a respective portion of the supporting frame 15. In other words, the panels 10 and 11 are, in particular, rigidly connected on opposite sides of the supporting frame 15.

Advantageously, the delimitation module 9 also comprises fastening means 16, in particular threaded fastening means, configured to connect (in particular in addition to the supporting frame 15) the two panels 10 and 11 to each other. In addition, the fastening means 16 also act as spacers, thus ensuring the consistency of the distance D1 of the collection cavity 12 and preventing undesirable buckling of the panels 10 and 11. The first plurality of fastening means 16 is arranged near the proximal end EP. While the second plurality of fastening means 16 is arranged near the distal end ED. The second plurality of fastening means 16 is arranged to ensure that the last part of the separating element 2 protrudes overhanging the extraction opening 14 (in particular, from the perimetral edges 14B-14D), in order to allow the separating element 2 to tilt slightly into the collection cavity 12 to facilitate its extraction. The second plurality of fastening means 16 also delimits the insertion depth of the separating element 2 into the collection cavity 12.

Advantageously, the delimitation module 9 comprises at least two supporting columns 17. The supporting columns 17 rest on the support plane of module 9 and are configured to keep the module 9 itself upright. Advantageously, the columns 17 are connected to the frame 25.

Advantageously, but without imposing limitations, according to an additional solution not illustrated, the delimitation module 9 comprises a collection container connected to the panel 11 (in particular on the side opposite the collection cavity 12, that is, protruding from the footprint of the panel 11 in the direction Z). The collection container is open at the top and in the area facing the extraction opening 14. The collection container faces the collection cavity 12, so that the separating elements 2 introduced into the collection cavity 12 are accommodated within it. The collection container makes it possible to increase the collection volume of the collection cavity 12 (and thus the number of separating elements 2 that can be accommodated in the collection cavity 12). The collection container preferably has a front wall (that is, the wall opposite the collection cavity 12) that is inclined outwards (of the collection container itself), so as to facilitate grasping and removal of the separating element 2 from the delimitation module 9. In particular, the front wall of the collection container is inclined at an angle to the vertical of between 5 and 20°, preferably between 10 and 15°. The inclination allows the separating element 2 to be arranged inclined against the front wall, thus avoiding unwanted clogging due to inserted separating elements 2 remaining above other separating elements 2 already present in the collection container.

Advantageously, but without imposing limitations, according to another embodiment not illustrated herein, the delimitation module 9 comprises at the introduction opening 13 a guide element (also known as a funnel) configured to facilitate the insertion and sliding of the separating element 2 into the collection cavity 12 when released by the gripping device 5.

According to another aspect of this invention, the collection system 1 of the separating element 2, which comprises the work area 7 comprising the delimitation module 9 and the gripping apparatus 4, is provided. The work area 7 is delimited along the perimeter by the plurality of partition walls 8 and at least one delimitation module 9 interposed between two partition walls 8. The gripping apparatus 4 is arranged in the work area 7 and is configured to grasp the separating element 2 and to position it in the collection cavity 12 of the delimitation module 9 through an introduction opening 13 of the delimitation module 9.

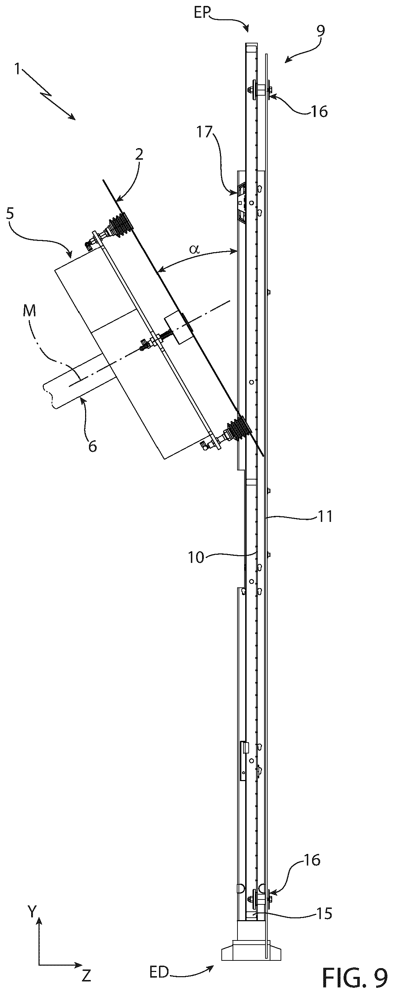

As illustrated in Figure 9, the gripping apparatus 4 is preferably configured to introduce the separating element 2 into the collection cavity 12 with an angle α of inclination of less than 75°, in particular, between 15° and 45°, more particularly equal to 30°. The gripping apparatus 4 is also configured to introduce the separating element 2 into the collection cavity 12 at an angle α of zero inclination, that is, parallel to the panels 10 and 11.

Advantageously, but without imposing limits, the gripping apparatus 4 is configured to rotate the separating element 2 about an axis M, orthogonal to the plane of the separating element 2 itself before introducing it into the collection cavity 12. In this way, a possible collision between the delimitation module 9 and the gripping apparatus 4 during the insertion of the separating element 2 into the collection cavity 12 is avoided.

Advantageously, but without imposing limits, the delimitation module 9 or collection system 1 comprises at least one sensor (not illustrated). Possible sensors are: a sensor configured to detect the release of the separating element 2 into the collection cavity 12; and/or a sensor (in particular an optical one, such as a camera) configured to detect the presence of the interlayer (on the gripping apparatus 4 and/or on the feeding support); and/or a sensor configured to count the number of separating elements 2 present in the collection cavity 12; and/or a sensor configured to detect the fill level (full/empty) of the collection cavity 12.

In use, the gripping device 5 picks up the separating element 2 from the feeding support, performs a possible rotation of the separating element 2 about its axis M and then introduces the separating element 2 into the collection cavity 12. When necessary, at least one separating element 2 is removed through the extraction opening 14 safely and without accessing the work area.

The delimitation module 9 and the collection system 1 described so far have a number of advantages.

The advantage of the delimitation module 9 is that it allows for more compact work areas, which therefore have a reduced footprint (space), as it is no longer necessary to enter the work area 7 to pick up the separating elements 2. Instead, the operator can pick up the separating elements 2 easily from outside, in complete safety and without having to stop (interrupt) the handling of the handling device 6.

The solution described also has the advantage of allowing the dimensions (that is, height and width) of the introduction opening 13 to be reduced (by up to 30%) compared to those indicated above, in the event that the gripping device 5 releases the separating element 2 with a greater inclination α.

The delimitation module 9 also has the advantage that it allows the separating element 2 to be extracted and then removed manually or semi-automatically or fully automatically (for example, with the aid of an additional robotic arm).

### LIST OF REFERENCE NUMBERS IN THE FIGURES

- 1: collection system
- 2: separating element
- 3: groups
- 4: gripping apparatus
- 5: gripping device
- 6: handling device
- 7: work area
- 8: partition walls
- 9: delimitation module
- 10: panel
- 10A: edge
- 10B: edge
- 10C: edge
- 10D: edge
- 11: panel
- 11A: edge
- 11B: edge
- 11C: edge
- 11D: edge
- 12: cavity
- 13: introduction opening
- 13A: edge
- 13B: edge
- 13C: edge
- 13D: edge
- 14: extraction opening
- 14A: edge
- 14B: edge
- 14C: edge
- 14D: edge
- 14E: edge
- 14F: edge
- 15: supporting frame
- 16: connection means
- D1: distance
- D2: distance
- α: angle
- ED: distal end
- EP: proximal end
- M: axis
- P1: portion
- P2: portion
- X: direction
- Y: direction
- Z: direction

## Claims

1. A perimetral delimitation module (9) for a work area (7) of a gripping apparatus (4) configured for removing a flat separating element (2), which is arranged between two groups (3) of blanks overlapping one another, and which is configured to collect within it the at least one separating element (2); the perimetral delimitation module (9) comprises:
a pair of vertical panels (10, 11) that are parallel and opposed to each other; the panels (10, 11) are spaced apart with a first distance (D1), so as to define between them a collection cavity (12) that is configured to accommodate the at least one separating element inserted by the gripping apparatus (4);
the first panel (10) faces the work area (7) and is provided with an introduction opening (13) through which the separating element (2) is inserted in the cavity (12); and
the second panel (11) is arranged on the opposite side of the first panel (10) which is opposite to the work area (7); and the second panel (11) is provided with an extraction opening (14) through which the collection cavity (12) is accessible to take at least one separating element from the collection cavity (12).

2. The delimitation module (9) according to claim 1, wherein the first distance (D1) is less than 25 mm, in particular 20 mm.

3. The delimitation module (9) according to claim 1 or 2, wherein:
the first panel (10) is made of wire mesh, in particular an electrowelded wire mesh; and/or
the second panel (11) is made of a material chosen from: a metallic material, such as a steel sheet; or a plastic material, such as a thermosetting resin, more particularly Plexiglas^{®}, or a thermoplastic polymer, such as polycarbonate.

4. The delimitation module (9) according to any preceding claim, wherein the delimitation module (9) comprises a supporting frame (15);
at least one of the panels (10, 11) is, in particular rigidly connected, to the supporting frame (15).

5. The delimitation module (9) according to any preceding claim, wherein:
the introduction opening (13) and the extraction opening (14) are vertically spaced and offset from each other; and
a lower perimetral edge (13A, 13B, 13C, 13D) of the introduction opening (13) is spaced with a second distance (D2) from an upper perimetral edge (14A, 14B, 14C, 14D, 14E, 14F) of the extraction opening (14).

6. The delimitation module (9) according to any one of the preceding claims, wherein the introduction opening (13) has a polygonal shape, particularly a rectangular shape, and
each perimetral edge (13A, 13B, 13C, 13D) of the introduction opening (13) is spaced from a respective perimetral edge (10A, 10B, 10C, 10D) of the first panel (10); or at least one of the perimetral edges (13A, 13B, 13C, 13D) of the introduction opening (13) coincides with a respective perimetral edge (10D) of the first panel (10).

7. The delimitation module (9) according to any one of the preceding claims, wherein the extraction opening (14) has a polygonal shape; and
at least two perimetral edges (14A, 14B, 14C, 14D, 14E, 14F) of the extraction opening (14) coincide with, or are parallel to, two respective perimetral edges (11C, 11D) of the second panel (11).

8. The delimitation module (9) according to claim 7, wherein the extraction opening (14) comprises a trapezoidal portion and a rectangular portion; wherein the trapezoidal portion protrudes more into the plane of the second panel (11) than the rectangular portion.

9. A collecting system (1) of a separating element that is arranged between two groups (3) of blanks overlapping one another; the collecting system (1) comprises:
a work area (7) that is bounded perimetrically by a plurality of partition walls (8) and a perimetral delimitation module (9) interposed between two partition walls (8); wherein the delimitation module (9) comprises a collection cavity (12) and is made according to any one of claims 1 to 8; and
a separating element gripping apparatus (4) that is arranged in the work area (7) and is configured to grasp the separating element and to position it in the collecting cavity (12) of the delimitation module (9) through an introduction opening (13) of the delimitation module (9) itself.

10. The collecting system (1) according to claim 9, wherein the gripping apparatus (4) is configured to introduce the separating element (2) into the collecting cavity (12) with an angle (α) of inclination of less than 75°, more particularly between 15° and 45°, more particularly equal to 30°.

11. The collecting system (1) according to claim 9 or 10, wherein the gripping apparatus (4) is configured to rotate the separating element about an axis (M), orthogonal to the separating element itself, before introducing it into the collecting cavity (12).
